# EUROPEAN PATENT SPECIFICATION

(11) **EP 2 894 307 B1**
(45) Date of publication and mention of the grant of the patent: **17.01.2018**
(21) Application number: 13826371.0
(22) Date of filing: 04.04.2013
(51) Int. Cl.: F01N 3/20, F01N 3/08, F01N 3/22, F01N 3/24, B01D 53/90, B01D 53/94, F01N 3/28, F01N 3/30, F01N 5/02, F02B 37/16

(54) **EXAHAUST GAS DENITRATION EQUIPMENT FOR RECIPROCATING ENGINE**
ABGASENTSTICKUNGSVORRICHTUNG FÜR EINEN HUBKOLBENMOTOR
ÉQUIPEMENT DE DÉNITRATION DE GAZ D'ÉCHAPPEMENT POUR MOTEUR ALTERNATIF

(30) Priority: 03.08.2012 JP 2012172427
(43) Date of publication of application: 15.07.2015
(73) Proprietor: Hitachi Zosen Corporation, Osaka-shi, Osaka 559-8559 (JP)
(72) Inventor: TANAKA, Hironaka, Osaka-shi, Osaka 559-8559 (JP)
(74) Representative: Van Breda, Jacobus
(86) International application number: PCT/JP2013/060270
(87) International publication number: WO 2014/020944

(56) References cited:
- EP-A1- 2 320 044
- WO-A1-2012/060155
- DE-A1-102004 027 593
- JP-A- 2010 031 797
- JP-A- 2011 513 643
- JP-A- 2012 036 881
- JP-A- 2012 097 665
- US-A- 4 674 283
- US-A1- 2011 252 788

## Description

### Technical Field

The present invention relates to exhaust gas denitration equipment for a reciprocating engine, the equipment including an evaporation chamber for spraying urea water or ammonia water into exhaust gas discharged from a large reciprocating engine installed in, for example, a ship, and a reaction chamber having a catalytic unit for removing nitrogen oxides in contact with exhaust gas.

### Background Art

In order to remove nitrogen oxides (NOₓ) in exhaust gas discharged from a reciprocating engine, a technique is proposed to spray urea water as a reducing agent into exhaust gas in an evaporation chamber and then bring the exhaust gas and a denitration catalyst into contact with each other in a denitration reaction chamber according to a catalytic reduction (SCR) method. In this case, the reciprocating engine is an engine including a reciprocated piston, for example, a gasoline engine or a diesel engine.

For example, in a ship having a large diesel engine, exhaust gas is introduced into an exhaust gas denitration chamber and then is denitrated according to the catalytic reduction method. However, the denitration reduces the output of a supercharger that drives a turbine with exhaust gas. When exhaust gas passes through a denitration reaction chamber at a low temperature at the startup of the engine, heat is absorbed from the exhaust gas by the catalyst of the denitration reaction chamber and a vessel so as to cool the exhaust gas. This causes a turbo lag and reduces the response of the supercharger. Thus, provided in a used structure is a bypass pipe allowing exhaust gas discharged from the diesel engine to be directly introduced into a turbo charger without being introduced into the denitration reaction chamber.

### Citation List

### Patent Literature

Patent Literature 1: Japanese Patent Laid-Open No. 10-159542

### Summary of Invention

### Technical Problem

Conventionally, the amount of emission of nitrogen oxides has been moderately regulated in exhaust gas discharged from a diesel engine. In some sea areas, however, the amount of emission of nitrogen oxides has been considerably cut under severe regulations. If a ship successively passes through a NOₓ-regulated sea area under severe regulations and a NOₓ-unregulated sea area under moderate regulations, exhaust gas does not need to be introduced into a denitration reaction chamber during sailing in the NOₓ-unregulated sea area.

As has been discussed, if exhaust gas is not introduced into the denitration reaction chamber, the temperature of the denitration reaction chamber decreases. Exhaust gas contains 5 vol% to 6 vol% of moisture and SO₃ gas with a concentration of 10 ppm to 40 ppm. When the denitration reaction chamber reaches the dewpoint temperature of SO3, sulfuric acid condenses on the surface of denitration catalyst, leading to deterioration of the denitration catalyst.

Hence, an object of the present invention is to provide exhaust gas denitration equipment for a reciprocating engine so as to prevent condensation of sulfuric acid from deteriorating a denitration catalyst.

JP 2012 097665 discloses an exhaust gas denitration equipment according to the preamble of claim 1.

US2011/0252788 discloses exhaust gas denitration equipment wherein a scavenging air receiver tank receives combustion air from an air outlet port of a compressor unit of the supercharger, the combustion air being cooled through an intermediate air cooler, and the scavenging air receiver tank being connected to an inlet pipe that extracts part of the combustion air as the purge air. US2011/0252788 further discloses an inlet pipe connected to a path between an air outlet port of a compressor unit of the supercharger and an intermediate air cooler so as to extract part of compressed combustion air as the purge air.

### Solution to problem

In order to solve the problem in accordance with a first aspect of the invention the denitration equipment further comprises a scavenging air receiver tank that receives combustion air from an air outlet port of a compressor unit of the supercharger, the combustion air being cooled through an intermediate air cooler, the scavenging air receiver tank is connected to an inlet pipe that extracts part of the combustion air as the purge air, the inlet pipe has a heat transfer pipe for heating the purge air, and the heat transfer pipe is provided in the exhaust-air receiver tank.

According to a second aspect of the invention the exhaust-air receiver tank, the evaporation unit, and the reaction unit are provided in a single denitration reaction vessel.

### Advantageous effects of the invention

In the configuration according to the first aspect, the bypass pipe is opened to directly introduce exhaust gas into the supercharger; meanwhile, exhaust gas is not introduced into the reaction unit. At this point, purge air is sprayed into the reaction unit by the purge air supply device and then exhaust gas retained near the catalytic unit is discharged from the reaction unit. This can prevent a reduction in temperature in the reaction unit and condensation of sulfuric acid, precluding deterioration of denitration catalysts in the catalytic unit.

In this configuration the scavenging air receiver tank receives combustion air that is pressed by the supercharger, is cooled and dried by the intermediate air cooler, and is set at a higher pressure than in the reaction unit. From the scavenging air receiver tank, combustion air is partially extracted as purge air into the inlet pipe and then is fed into the reaction unit from the inlet pipe. Thus, air near the denitration catalysts can be dried and effectively discharged with entrained exhaust gas. This can prevent condensation of sulfuric acid from deteriorating the denitration catalysts of the catalytic unit. Moreover, high-pressure combustion air is partially extracted as purge air from the reaction unit, eliminating the need for a ventilating fan for ventilation into the reaction unit.

The high-pressure combustion air is partially extracted as purge air from the reaction unit, eliminating the need for a ventilating fan for ventilation into the reaction unit.

Further the high-pressure purge air extracted at a relatively low temperature from the exhaust-air receiver tank can be introduced into the exhaust-air receiver tank, can be heated using exhaust heat from exhaust gas by the heat transfer pipe provided in the exhaust-air receiver tank, and then can be sprayed into the reaction chamber. This can more effectively prevent condensation of sulfuric acid from deteriorating the denitration catalysts of the catalytic unit.

In the configuration according to the second aspect, the exhaust-air receiver tank, the evaporation unit, and the reaction unit are provided in the single denitration reaction vessel, thereby reducing the size of the exhaust gas denitration equipment.

### Brief Description of the Drawings

[FIG. 1] FIG. 1 is a structural diagram showing a first embodiment of exhaust gas denitration equipment according to the present invention.
[FIG. 2] FIG. 2 is a structural diagram showing a second embodiment of the exhaust gas denitration equipment.
[FIG. 3] FIG. 3 is a structural diagram showing a third embodiment of the exhaust gas denitration equipment.
[FIG. 4] FIG. 4 is a structural diagram showing a fourth embodiment of the exhaust gas denitration equipment.
[FIG. 5] FIG. 5 is a structural diagram showing a fifth embodiment of the exhaust gas denitration equipment.
[FIG. 6] FIG. 6 is a structural diagram showing a sixth embodiment of the exhaust gas denitration equipment.

### Description of Embodiments

First to sixth embodiments of large exhaust gas denitration equipment for a reciprocating engine for ships or ground installation according to the present invention will be described below with reference to the accompanying drawings.

### [First Embodiment]

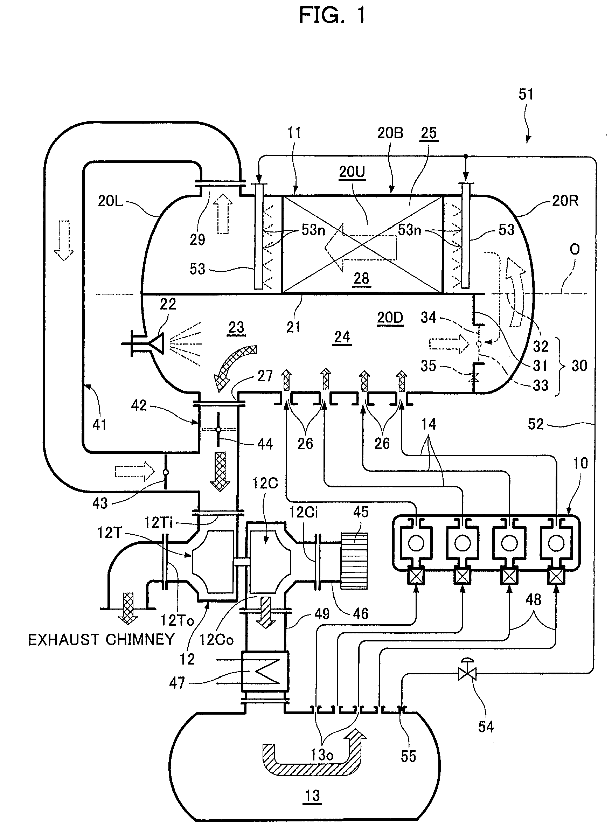

FIG. 1 shows a first embodiment of exhaust gas denitration equipment for a ship diesel engine. The exhaust gas denitration equipment denitrates exhaust gas discharged from the combustion chamber of a diesel engine 10. Reference numeral 11 denotes a denitration reaction vessel, reference numeral 12 denotes a supercharger driven by exhaust gas discharged from the diesel engine 10, and reference numeral 13 denotes a scavenging air receiver tank that temporarily stores compressed combustion air from the supercharger 12 and supplies the air to the combustion chamber of the diesel engine 10.

The denitration reaction vessel 11 is a pressure-resistant vessel including a horizontal and cylindrical body 20B and pressure-resistant end plates 20R and 20L that are attached to two ends of the body 20B and are convexly curved. The denitration reaction vessel 11 is divided into a lower space 20D and an upper space 20U by a partition wall 21 extended along a vessel axis O direction. The lower space 20D includes an evaporation chamber (evaporation unit) 23 and an exhaust-air receiver tank 24 while the upper space 20U includes a reaction chamber (reaction unit) 25.

In the evaporation chamber 23 provided next to the end plate 20L of the lower space 20D, urea water (or ammonia water) acting as a reducing agent is sprayed into exhaust gas from a spray nozzle 22, which penetrates the end plate 20L, and then the urea water is mixed with exhaust gas. The exhaust-air receiver tank 24 is formed on the other end of the evaporation chamber 23. Moreover, a plurality of exhaust gas inlets 26 for introducing exhaust gas from the diesel engines 10 through exhaust gas pipes 14 are formed at the bottom of the body 20B of the exhaust-air receiver tank 24. The exhaust-air receiver tank 24 is integrally formed with the evaporation chamber 23 and slows down a flow with added exhaust gas. The body 20B has an untreated gas outlet 27, which is opened so as to face the evaporation chamber 23, near the lower part of the end plate 20L.

The end plate 20R of the body 20B has a communicating part 30 in which the lower space 20D and the upper space 20U communicate with each other. The communicating part 30 has a division wall 31 that is attached along the cross section of the vessel between the partition wall 21 and the body 20B near the evaporation chamber 23, an intermediate passage 32 formed between the partition wall 21 and the end plate 20R, and a gas outlet opening 33 provided on the division wall 31.

As indicated by a virtual line, the gas outlet opening 33 may have an evaporation chamber outlet valve (gas shut-off valve) 34 while the division wall 31 may have at least one pressure control port 35 that adjusts the evaporation chamber 23 and the reaction chamber 25 to have an equal pressure.

The reaction chamber 25 of the upper space 20U contains a plurality of catalytic units 28 that are vertically and horizontally stacked between the partition wall 21 and the body 20B and are connected in the vessel axis O direction so as to form a unit assembly. The catalytic unit 28 has a storage frame that contains catalyst elements shaped like a honeycomb in cross section. The catalytic unit 28 may be shaped like a rectangle or a trapezoid as well as a square in cross section. Exhaust gas containing urea water (or ammonia water) is brought into contact with denitration catalysts provided in the catalytic units 28, thereby reducing NOₓ.

With this configuration, the single denitration reaction vessel 11 accommodates the evaporation chamber 23, which is integrated with the exhaust-air receiver tank 24, and the reaction chamber 25, achieving a smaller footprint.

A bypass pipe 42 is connected between the untreated gas outlet 27 formed on the evaporation chamber 23 and an air inlet 12Ti for a turbine unit 12T of the supercharger 12. Moreover, an exhaust gas change-over valve 44 having a butterfly valve is provided at the entrance of the bypass pipe 42.

Furthermore, a denitrated-gas discharge pipe 41 is connected between a denitrated gas outlet 29 provided on one end of the reaction chamber 25 and the exit of the bypass pipe 42. Near the exit of the denitrated-gas discharge pipe 41, a denitrated-gas outlet valve (gas shut-off valve) 43 having a butterfly valve is provided so as to close the denitrated-gas discharge pipe 41.

Thus, untreated exhaust gas or denitrated exhaust gas from the combustion chamber of the diesel engine 10 is introduced into the air inlet 12Ti from the denitration reaction vessel 11 through the denitrated-gas discharge pipe 41 or the bypass pipe 42, rotates the impeller of the turbine unit 12T, and then is discharged from an air outlet 12To through an exhaust air chimney.

An air inlet pipe 46 having an air filter 45 at the entrance is connected to an air inlet port 12Ci of a compressor unit 12C. Moreover, a supercharger discharge pipe (path) 49 connected to an air outlet port 12Co of the compressor unit 12C is connected to the scavenging air receiver tank 13. The supercharger discharge pipe 49 has an intermediate air cooler (air cooler) 47 for cooling compressed and heated combustion air.

Scavenging air supply pipes 48 are connected between air supply ports 13o of the scavenging air receiver tank 13 and the diesel engine 10 so as to supply compressed combustion air.

### (Purge air supply device)

In a purge air supply device 51 according to the present invention, exhaust gas is directly introduced to the supercharger 12 from the bypass pipe 42 without being introduced to the reaction chamber 25. At this point, purge air is sprayed into the catalytic unit 28 of the reaction chamber 25. Thus, the atmosphere of the reaction chamber 25 is kept at a SO₃ dew-point temperature or higher or in a dry state so as to prevent condensation of sulfuric acid. In this case, the SO₃ dew-point temperature of exhaust gas is 120°C to 140°C with a moisture content of 5 vol% to 6 vol% and a SO₃ concentration of 10 ppm to 40 ppm.

The purge air supply device 51 according to the first embodiment supplies part of combustion air in the scavenging air receiver tank 13 as purge air to the reaction chamber 25. A purge-air inlet pipe (inlet pipe) 52 is connected to an air extraction port 55 formed on the scavenging air receiver tank 13. The purge-air inlet pipe 52 is connected to purge air headers 53 respectively provided at the entrance (upstream side) and the exit (downstream side) of the catalytic unit 28 provided in the reaction chamber 25. Reference numeral 54 denotes an electromagnetic on-off valve provided on the purge-air inlet pipe 52.

Combustion air in the scavenging air receiver tank 13 is compressed by the compressor unit 12C, heat is removed from the air by the intermediate air cooler 47 to condense moisture, and then the moisture is transferred to the scavenging air receiver tank 13. Thus, dry combustion air with a low moisture content at a temperature of 40°C to 50°C can be partially used as purge air.

In the case of an engine load of 100%, an exhaust gas pressure is 0.3 MPaG (gage pressure) in the exhaust-air receiver tank 24 (reaction chamber 25), whereas combustion air has a high pressure of 0.4 MPaG (gage pressure) in the scavenging air receiver tank 13. Hence, the purge-air inlet pipe 52 does not need to have a blowing pump that supplies purge air into the reaction chamber 25 from the scavenging air receiver tank 13.

Thus, the exhaust gas change-over valve 44 is opened so as to open the bypass pipe 42 and the denitrated-gas outlet valve (gas shut-off valve) 43 is closed so as to close the denitrated-gas discharge pipe 41. With this configuration, exhaust gas in the exhaust-air receiver tank 24 is introduced into the turbine unit 12T from the bypass pipe 42, preventing a turbo lag or a reduction in the output of the supercharger 12. At this point, the on-off valve 54 is opened and then combustion air compressed and dried in the scavenging air receiver tank 13 is partially sucked into the purge-air inlet pipe 52 as purge air. The dried purge air is sprayed to the catalytic units 28 from the purge air headers 53 through spray nozzles 53n. With this configuration, exhaust gas near the catalytic units 28 is fed to the exhaust-air receiver tank 24, preventing condensation of sulfuric acid from deteriorating the denitration catalysts of the catalytic units 28.

With this configuration, exhaust gas discharged from the diesel engine 10 is directly supplied to the supercharger 12 through the bypass pipe 42. At this point, the on-off valve 54 is operated and then combustion air in the scavenging air receiver tank 13 is partially introduced into the purge-air inlet pipe 52 as purge air. Subsequently, the purge air is sprayed from the purge air headers 53 to the entrances and exits of the catalytic units 28 of the reaction chamber 25 through the spray nozzles 53n. The purge air reduces the moisture content and the SO₃ concentration of exhaust gas left in the catalytic units 28 to place the gas into a dry atmosphere. Exhaust gas is further entrained and is discharged into the exhaust-air receiver tank 24 from the gas outlet opening 33. This can prevent sulfate components in exhaust gas from being condensed and deposited on the surfaces of the catalytic units 28 so as to deteriorate the denitration catalysts.

### [Second Embodiment]

In the first embodiment, combustion air in the scavenging air receiver tank 13 is partially used as purge air, whereas in a second embodiment, purge air to be used is heated. The same components as in the first embodiment are indicated by the same reference numerals and the explanation thereof is omitted.

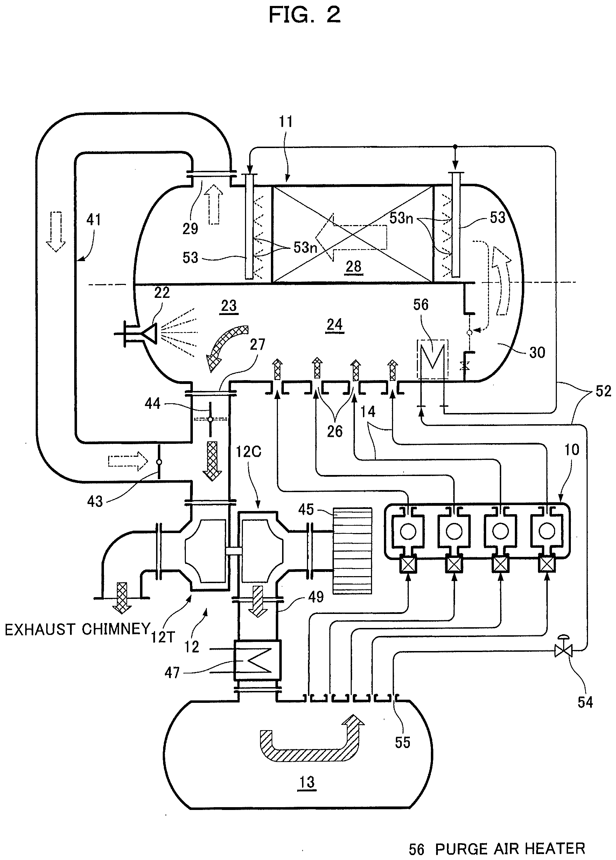

As shown in FIG. 2, in the second embodiment, a heat-exchange purge air heater 56 for increasing the temperature of purge air is installed in an exhaust-air receiver tank 24 that is heated to 400°C to 500°C by exhaust gas.

Specifically, combustion air dried at 40°C to 50°C in a scavenging air receiver tank 13 is partially sucked into a purge-air inlet pipe 52 as purge air, is introduced into the purge air heater 56, and then is heated to about 200°C by exhaust gas in the exhaust-air receiver tank 24. Subsequently, the heated purge air is introduced into purge air headers 53 from the purge-air inlet pipe 52 and then is sprayed to the entrance sides and the exit sides of catalytic units 28 of a reaction chamber 25 from spray nozzles 53n.

With this configuration, the vicinity of the catalytic units 28 of the reaction chamber 25 is heated and dried by purge air dried at a high temperature; meanwhile, exhaust gas retained near the catalytic units 28 is entrained and discharged to the exhaust-air receiver tank 24. This effectively prevents condensation of sulfuric acid in the reaction chamber 25 from causing dew point corrosion of denitration catalysts of the catalytic units 28.

### [Third Embodiment]

In the first and second embodiments, combustion air in the scavenging air receiver tank 13 is partially extracted as purge air. In a third embodiment, combustion air compressed by the turbine of a compressor unit 12C of a supercharger 12 is partially extracted. The same members as in the first embodiment are indicated by the same reference numerals and the explanation thereof is omitted.

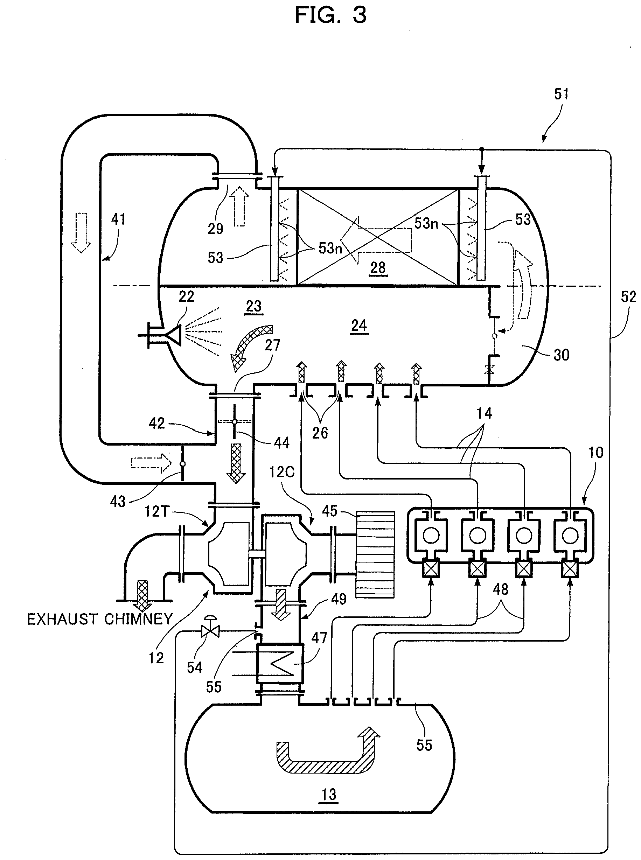

As shown in FIG. 3, an air extraction port 55 is provided upstream of an intermediate air cooler 47 on a supercharger discharge pipe (path) 49. A purge-air inlet pipe 52 is connected to the air extraction port 55. With this configuration, combustion air compressed by the compressor unit 12C of the supercharger 12 is partially extracted as purge air from the air extraction port 55 before being cooled by the intermediate air cooler 47. Thus, purge air at about 200°C (containing the moisture of extracted air) can be obtained. In this case, the supercharger discharge pipe 49 has an air pressure of 0.4 MPaG, whereas a reaction chamber 25 has a low exhaust gas pressure of 0.3 MPaG, eliminating the need for a blowing pump on the purge-air inlet pipe 52. Compressed air before being cooled in the supercharger discharge pipe 49 has a moisture content as high as the atmosphere.

Thus, air in the vicinity of catalytic units 28 of the reaction chamber 25 can be heated and dried by the high-temperature purge air and then can be discharged to an exhaust-air receiver tank 24 with exhaust gas retained near the catalytic units 28. This can effectively prevent condensation of sulfuric acid and dew point corrosion of denitration catalysts in the reaction chamber 25.

### [Fourth Embodiment]

In the first to third embodiments, the exhaust gas denitration equipment includes the denitration reaction vessel 11 that accommodates, as a single unit, the exhaust-air receiver tank 24, the evaporation chamber 23, and the reaction chamber 25. In fourth to sixth embodiments, an exhaust-air receiver tank, an evaporation chamber, and a reaction chamber are independently installed in exhaust gas denitration equipment.

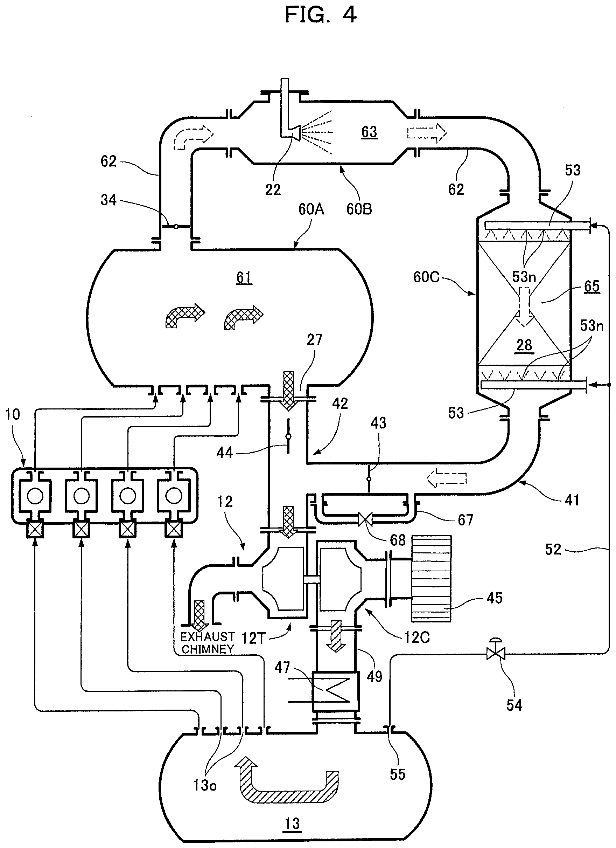

Referring to FIG. 4, the fourth embodiment will be described below. The same members as in the first embodiment are indicated by the same reference numerals and the explanation thereof is omitted.

An independent vessel 60A includes an exhaust-gas receiver tank 61, an independent vessel 60B includes an evaporation chamber 63, and an independent vessel 60C includes a reaction chamber 65 provided with purge air headers 53 and catalytic units 28. The exhaust-gas receiver tank 61 and the evaporation chamber 63 are connected to each other via a first exhaust gas pipe 62. The evaporation chamber 63 and the reaction chamber 65 are connected to each other via a second exhaust gas pipe 64. Moreover, a denitrated-gas discharge pipe 41 is connected to the reaction chamber 65.

The denitrated-gas discharge pipe 41 is connected to a bypass pipe 42, which is connected to the exhaust-gas receiver tank 61, on the downstream side of an exhaust gas change-over valve 44., Moreover, a pressure regulating pipe 67 connecting the upstream and downstream sides of a denitrated-gas outlet valve 43 at the exit of the denitrated-gas discharge pipe 41 is connected to the denitrated-gas discharge pipe 41. The pressure regulating pipe 67 has a pressure regulating valve 68 that equalizes pressures in the reaction chamber 65 and the evaporation chamber 63 on the upstream side and a pressure in the bypass pipe 42(the exhaust-gas receiver tank 61) on the downstream side when the denitrated-gas outlet valve 43 is closed. The pressure regulating pipe 67 can release purge air into the bypass pipe 42, the purge air having been supplied from spray nozzles 53n of the purge air headers 53 and entrained with exhaust gas in the reaction chamber 65.

In the fourth embodiment, the denitrated-gas outlet valve 43 is closed, the exhaust gas change-over valve 44 is opened, and then exhaust gas discharged from a diesel engine 10 is directly supplied to a supercharger 12 through the bypass pipe 42. At this point, an on-off valve 54 and the pressure regulating valve 68 are opened, introducing part of combustion air in a scavenging air receiver tank 13 into a purge-air inlet pipe 52 as purge air. The air is then sprayed to the upstream and downstream sides of the reaction chamber 65 from the purge-air inlet pipe 52 through the spray nozzles 53n. The purge air reduces the moisture content and the SO₃ concentration of the reaction chamber 65 and is discharged with exhaust gas into the bypass pipe 42 from the pressure regulating pipe 67.

This can prevent sulfate components in exhaust gas from being condensed and deposited on the surfaces of the catalytic units 28 so as to deteriorate the denitration catalysts of the catalytic units 28.

### [Fifth Embodiment]

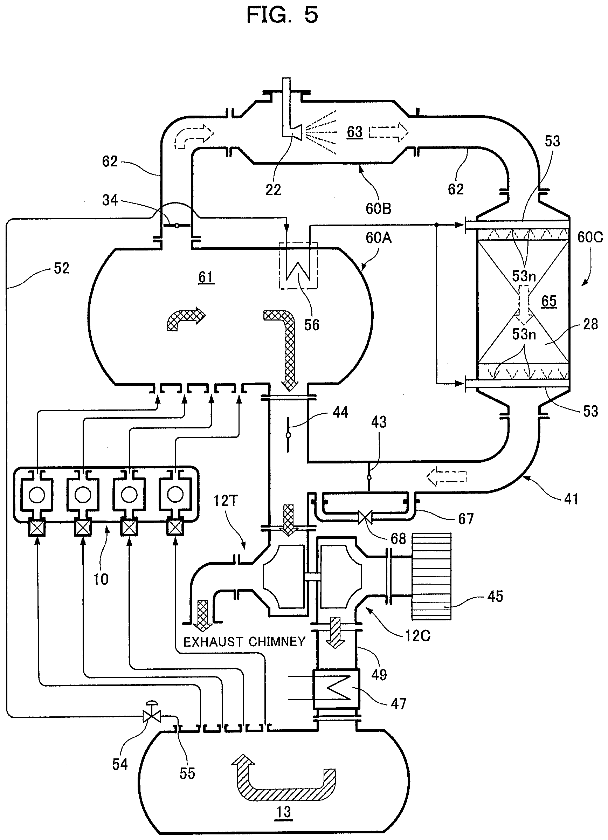

In a fifth embodiment, a purge air heater 56 for heating purge air is installed in an exhaust-gas receiver tank 61 in an independent vessel structure shown in FIG. 4. Referring to FIG. 5, the fifth embodiment will be described below. The same members as in the second and fourth embodiments are indicated by the same reference numerals and the explanation thereof is omitted.

In the same configuration as in the fourth embodiment, combustion air at 40°C to 50°C in a scavenging air receiver tank 13 is partially extracted as purge air into a purge-air inlet pipe 52, and then the purge air is introduced into the purge air heater 56 installed in the exhaust-gas receiver tank 61 and is heated to about 200°C. Subsequently, the purge air is sprayed to the upstream and downstream sides of a catalytic unit 28 of a reaction chamber 65 from spray nozzles 53n.

The fifth embodiment can obtain the same effect as the second embodiment.

### [Sixth Embodiment]

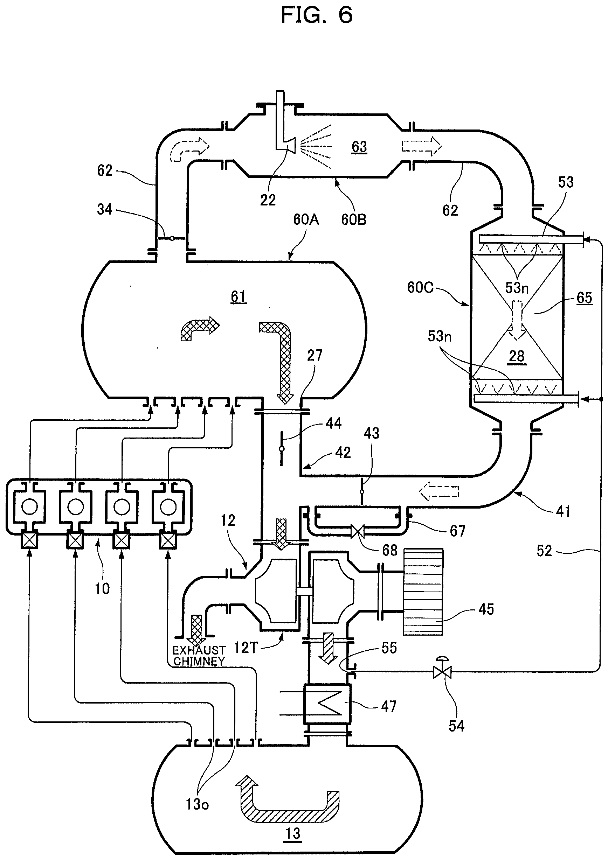

In a sixth embodiment, an air extraction port 55 is formed on a supercharger discharge pipe 49 (shown in FIG. 3) to extract part of combustion air as purge air in an independent vessel structure shown in the fourth and fifth embodiments. Referring to FIG. 6, the sixth embodiment will be described below. The same members as in the third and fourth embodiments are indicated by the same reference numerals and the explanation thereof is omitted.

Specifically, the air extraction port 55 is formed upstream of an intermediate air cooler 47 on the supercharger discharge pipe (path) 49, and a purge-air inlet pipe 52 is connected to the air extraction port 55. Combustion air is compressed by a compressor unit 12C of a supercharger 12 and is partially extracted as purge air before being cooled by the intermediate air cooler 47. Thus, purge air is obtained at about 200°C (containing the moisture of extracted air). The purge-air inlet pipe 52 having an on-off valve 54 is connected to the air extraction port 55. Purge air is fed from the purge-air inlet pipe 52 to purge air headers 53 installed on the upstream and downstream sides of a reaction chamber 65 and then is sprayed into the reaction chamber 65 through spray nozzles 53n.

The sixth embodiment can obtain the same effect as the third embodiment.

In the first to sixth embodiments, the diesel engine 10 may be a gasoline engine or a gas engine.

## Claims

1. Exhaust gas denitration equipment for a reciprocating engine (10), comprising an evaporation unit (23) that sprays a reducing agent into exhaust gas discharged from a reciprocating engine (10) through an exhaust-air receiver tank (24), a reaction unit (25) in which the exhaust gas containing the sprayed reducing agent is brought into contact with a catalytic unit (28) and is fed into a turbine unit (12T) of a supercharger (12), a bypass pipe (42) that can be opened or closed so as to directly supply exhaust gas from the reciprocating engine (10) to the turbine unit (12T) of the supercharger (12), and a purge air supply device (51) that sprays purge air into the reaction unit (25), when exhaust gas is directly introduced to the supercharger (12) from the bypass pipe (42), **characterized in that**
the denitration equipment further comprises a scavenging air receiver tank (13) that receives combustion air from an air outlet port of a compressor unit (12C) of the supercharger (12), the combustion air being cooled through an intermediate air cooler (47),
the scavenging air receiver tank (13) is connected to an inlet pipe (52) that extracts part of the combustion air as the purge air,
the inlet pipe (52) has a heat transfer pipe for heating the purge air, and
the heat transfer pipe is provided in the exhaust-air receiver tank (24).

2. The exhaust gas denitration equipment for a reciprocating engine (10) according to claim 1, wherein the exhaust-air receiver tank (24), the evaporation unit (23), and the reaction unit (25) are provided in a single denitration reaction vessel (11).

## Patentansprüche

1. Abgasdenitrierausrüstung für einen Kolbenmotor (10), die eine Verdampfungseinheit (23), die ein Reduktionsmittel in Abgas sprüht, das aus einem Kolbenmotor (10) durch einen Abluftaufnahmetank (24) abgegeben wird, eine Reaktionseinheit (25), in der das Abgas, das das gesprühte Reduktionsmittel beinhaltet, in Kontakt mit einer Katalyseeinheit (28) gebracht wird und in eine Turbineneinheit (12T) eines Turboladers geleitet wird, ein Umgehungsrohr (42), das geöffnet oder geschlossen sein kann, um so Abgas direkt von dem Kolbenmotor (10) zu der Turbineneinheit (12T) des Turboladers (12) zuzuführen, und eine Spülluftzufuhrvorrichtung (51) aufweist, die Spühlluft in die Reaktionseinheit (25) sprüht, wenn Abgas direkt von dem Umgehungsrohr (42) in den Turbolader (12) eingeführt wird, **dadurch gekennzeichnet, dass:**
die Denitrierausrüstung ferner einen Reinigungsluftaufnahmetank (13) aufweist, der Verbrennungsluft von einer Luftauslassöffnung einer Kompressoreinheit (12C) des Turboladers (12) aufnimmt, wobei die Verbrennungsluft durch einen Zwischenluftkühler (47) gekühlt wird,
der Reinigungsluftaufnahmetank (13) mit einem Einlassrohr (52) verbunden ist, das einen Teil der Verbrennungsluft als Spülluft extrahiert,
das Einlassrohr (52) ein Wärmeübertragungsrohr zum Erwärmen der Spülluft aufweist, und
das Wärmeübertragungsrohr in dem Abluftaufnahmetank (24) vorgesehen ist.

2. Die Abgasdenitrierausrüstung für einen Kolbenmotor (10) gemäß Anspruch 1, bei der der Abluftaufnahmetank (24), die Verdampfungseinheit (23) und die Reaktionseinheit (25) in einem einzelnen Denitrierreaktionsgefäß (11) vorgesehen sind.

## Revendications

1. Équipement de dénitration des gaz d'échappement pour un moteur alternatif (10), comprenant une unité d'évaporation (23) qui pulvérise un agent réducteur dans les gaz d'échappement évacués d'un moteur alternatif (10) à travers un réservoir de stockage d'air d'échappement (24), une unité de réaction (25) dans laquelle les gaz d'échappement contenant l'agent réducteur pulvérisé sont amenés en contact avec une unité catalytique (28) et sont introduits dans une unité de turbine (12T) d'un compresseur de suralimentation (12), un tuyau de dérivation (42) qui peut être ouvert ou fermé de manière à fournir directement les gaz d'échappement du moteur alternatif (10) à l'unité de turbine (12T) du compresseur de suralimentation (12), et un dispositif d'alimentation en air de purge (51) qui pulvérise l'air de purge dans l'unité de réaction (25), lorsque les gaz d'échappement sont directement introduits dans le compresseur de suralimentation (12) à partir du tuyau de dérivation (42), **caractérisé en ce que** :
l'équipement de dénitration comprend en outre un réservoir de stockage d'air de balayage (13) qui reçoit l'air de combustion à partir d'un orifice de sortie d'air d'un groupe compresseur (12C) du compresseur de suralimentation (12), l'air de combustion étant refroidi à travers un refroidisseur d'air intermédiaire (47),
le réservoir de stockage d'air de balayage (13) est relié à un tuyau d'admission (52) qui extrait une partie de l'air de combustion comme étant l'air de purge,
le tuyau d'admission (52) a un tuyau de transfert de chaleur pour chauffer l'air de purge, et
le tuyau de transfert de chaleur est prévu dans le réservoir de stockage d'air d'échappement (24).

2. Équipement de dénitration des gaz d'échappement pour un moteur alternatif (10) selon la revendication 1, dans lequel le réservoir de stockage d'air d'échappement (24), l'unité d'évaporation (23) et l'unité de réaction (25) sont prévus dans une seule cuve de réaction de dénitration (11).
